(19) Europäisches Patentamt
European Patent Office
Office européen des brevets

(11) EP 4 585 982 A1

(12) EUROPEAN PATENT APPLICATION
published in accordance with Art. 153(4) EPC

(43) Date of publication:
16.07.2025 Bulletin 2025/29

(51) International Patent Classification (IPC):
G02B 6/124 (2006.01)    G02B 27/01 (2006.01)

(21) Application number: 23951681.8

(22) Date of filing: 27.11.2023

(86) International application number:
PCT/CN2023/134416

(87) International publication number:
WO 2025/107331 (30.05.2025 Gazette 2025/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.11.2023 CN 202311553513

(71) Applicant: SEEV Optoelectronics Technology Co.,
Ltd.
Guangzhou, Guangdong 510530 (CN)

(72) Inventors:
• LI, Huida
  Guangzhou, Guangdong 510530 (CN)
• SHI, Rui
  Guangzhou, Guangdong 510530 (CN)
• LI, Xiaojun
  Guangzhou, Guangdong 510530 (CN)

(74) Representative: Zacco GmbH
Bayerstrasse 83
80335 München (DE)

(54) **DIFFRACTIVE OPTICAL WAVEGUIDE AND NEAR-EYE DISPLAY DEVICE**

(57) The embodiments of the present invention disclose a diffractive optical waveguide and a near-eye display device. The diffractive optical waveguide includes a waveguide substrate, and the waveguide substrate includes a functional area and a non-functional area thereon; the functional area includes an in-coupling grating area and an out-coupling grating area, and at least a part of the non-functional area is provided with an anti-reflection structure; light rays incident on the in-coupling grating area enter the waveguide substrate from the in-coupling grating area, and are totally internally reflected in the waveguide substrate and transmitted to the out-coupling grating area for emission; and light rays incident on the non-functional area pass through the anti-reflection structure, reducing reflection to improve the transmittance of the diffractive optical waveguide.

Fig. 3

EP 4 585 982 A1

**Description**

The present invention claims the priority based on the Chinese patent application with No. 202311553513.0, filed to the China National Intellectual Property Administration on November 20, 2023, the present invention of which is incorporated herein by reference in its entirety.

**Technical Field**

The embodiments of the present invention relate to the field of display technology, and for example, to a diffractive optical waveguide and a near-eye display device.

**Background**

With the rapid development of Virtual Reality (VR) and Augmented Reality (AR) technologies, people have higher demands for achieving more realistic and immersive experiences. As one of the key technologies for AR displays, optical waveguide technology is able to guide light to the front of the eyes of a user, presenting virtual information. Currently, AR technology has been widely applied in various fields such as education, entertainment and healthcare, and has achieved remarkable progress. However, AR display devices in the related art still have some technical challenges and limitations. One of these challenges is the selection and optimization of optical waveguide materials, with high-refractive-index materials being a core element in achieving efficient AR diffractive optical waveguides. Conventional optical waveguide materials, such as glass and polymers, typically have relatively low refractive indices, which limit the compactness and imaging quality of an optical waveguide structure. To avoid this issue, there has been some research and development of novel high refractive index materials in recent years. These materials typically have relatively high refractive indices, and are able to guide and transmit light beams more effectively, thereby achieve AR image displays with higher resolution, brightness and contrast.

Although high refractive index materials have excellent optical properties, there is also a common issue: low material transmittance. When light passes through the interface between air and a material, reflection occurs. In this case, the greater the difference between the refractive index of air and that of the material, the more energy is reflected, resulting in a decrease in the material transmittance.

**Summary**

In view of this, the embodiments of the present invention provide a diffraction optical waveguide and a near-eye display device, to avoid the issue in the related art where a diffraction optical waveguide formed using a high refractive index material has a low transmittance.

In an embodiment of the present invention, a diffractive optical waveguide is provided, including a waveguide substrate,

the waveguide substrate including a functional area and a non-functional area thereon;

the functional area includes an in-coupling grating area and an out-coupling grating area, and at least a part of the non-functional area is provided with an anti-reflection structure;

light rays incident on the in-coupling grating area enter the waveguide substrate from the in-coupling grating area, and are totally internally reflected in the waveguide substrate and transmitted to the out-coupling grating area for emission;

light rays incident on the non-functional area pass through the anti-reflection structure, reducing reflection to improve the transmittance of the diffractive optical waveguide.

At least a part of the non-functional area is provided with an anti-reflection structure; and the anti-reflection structure is provided in the non-functional area on one side of the waveguide substrate, or the anti-reflection structure is provided in the non-functional area on both sides of the waveguide substrate. In addition, the functional area on the waveguide substrate is provided on the same side, or is provided on different sides.

In another embodiment of the present invention, a near-eye display device is provided, including a diffractive optical waveguide described above.

**Brief Description of the Drawings**

Fig. 1 shows a schematic top-view diagram of the structure of a diffractive optical waveguide according to an embodiment of the present invention;

Fig. 2 shows a schematic diagram of the structure taken along the section line AA' in Fig. 1;

Fig. 3 shows a schematic diagram of the structure taken along the section line BB' in Fig. 1;

Figs. 4 and 5 each show a schematic diagram of another structure taken along the section line BB' in Fig. 1;

Fig. 6 shows schematic diagrams of the light paths of light transmitted by two diffractive optical waveguides according to embodiments of the present invention;

Fig. 7 shows a schematic top-view diagram of a partial structure of a non-functional area of a diffractive optical waveguide according to an embodiment of the present invention;

Fig. 8 shows a graph illustrating the relationship between transmittance and duty cycle of a diffractive optical waveguide according to an embodiment of the present invention;

Fig. 9 shows a graph illustrating the relationship between transmittance and depth of a diffractive optical waveguide according to an embodiment of the present invention;

Fig. 10 shows a schematic diagram of another structure taken along the section line BB' in Fig. 1;

Fig. 11 shows a schematic diagram of yet another structure taken along the section line AA' in Fig. 1.

## Detailed Description of the Embodiments

It should be noted that the terms "first" and "second" in the description, claims, and accompanying drawings of the present invention are used to distinguish similar objects, and are not necessarily used to describe a specific sequence or order. It should be understood that the data used in this context can be interchangeable where appropriate, such that the embodiments of the present invention described herein can be implemented in an order other than those illustrated or described herein. In addition, the terms "include" and "have", and any variations thereof, are intended to cover a non-exclusive inclusion, for example, a process, method, system, product, or apparatus that includes a series of steps or units is not necessarily limited to those steps or units that are expressly listed, but may include other steps or units that are not expressly listed or inherent to such process, method, product, or apparatus.

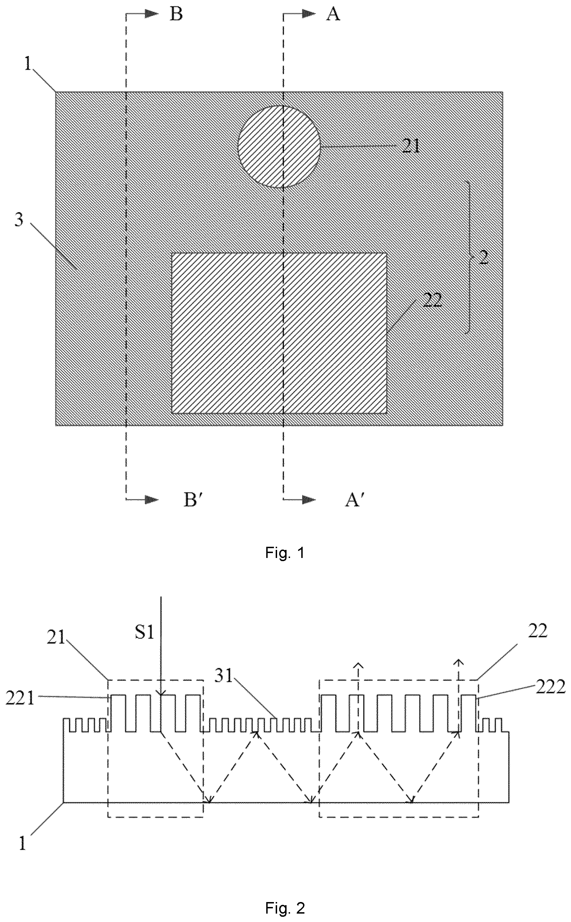

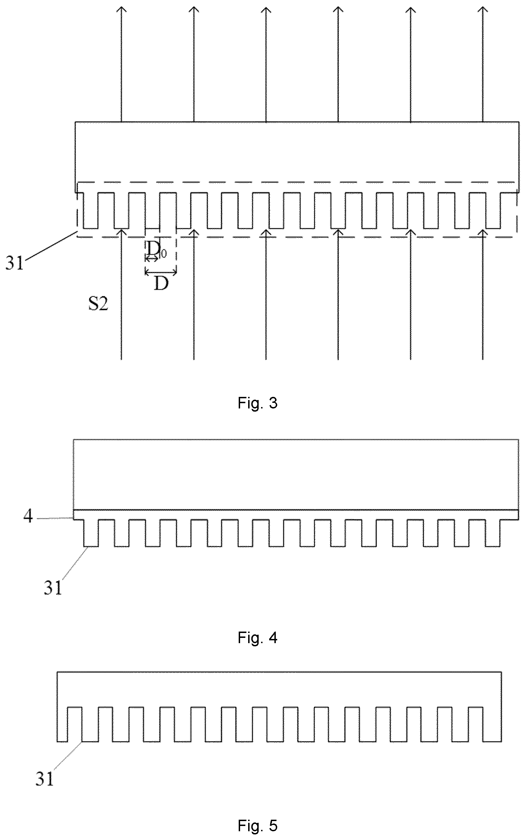

Fig. 1 shows schematic top-view diagram of the structure of a diffractive optical waveguide according to an embodiment of the present invention; Fig. 2 shows a schematic diagram of the structure taken along the section line AA' in Fig. 1; and Fig. 3 shows a schematic diagram of the structure taken along the section line BB' in Fig. 1. Referring to Figs. 1 to 3, a diffractive optical waveguide provided by an embodiment of the present invention includes a waveguide substrate 1, wherein the waveguide substrate 1 includes a functional area 2 and a non-functional area 3; the functional area 2 includes an in-coupling grating area 21 and an out-coupling grating area 22, and the non-functional area 3 is provided with an anti-reflection structure 31. Referring to Fig. 2, a light ray S1 incident on the in-coupling grating area 21 enters the waveguide substrate 1 from the in-coupling grating area 21, and is totally internally reflected in the waveguide substrate 1 and transmitted to the out-coupling grating area 22 for emission. Referring to Fig. 3, a light ray S2 incident on the non-functional area 3 passes through the anti-reflection structure 31, reducing reflection to improve the transmittance of the diffractive optical waveguide.

In an embodiment of the present invention, a diffractive optical waveguide includes a waveguide substrate 1, wherein the waveguide substrate 1 is provided with a functional area 2 and a non-functional area 3 thereon; the functional area 2 includes an in-coupling grating area 21 and an out-coupling grating area 22; the in-coupling grating area 21 is provided with an in-coupling grating 221; and the out-coupling grating area 22 is provided with an out-coupling grating 222, wherein the shapes of the in-coupling grating 221 and the out-coupling grating 223 shown in Fig. 2 are for illustrative purposes only; and in some embodiments, the shapes are able to be designed according to actual requirements, and the embodiment of the present invention is not limited thereto. In this embodiment, the light ray S1 (emitted by an optical device) incident on the in-coupling grating area 21 is diffracted into the waveguide substrate 1 by the in-coupling grating 211 of the in-coupling grating area 21; and the diffracted light beam satisfies the condition of total internal reflection within the waveguide substrate 1, and is totally internally reflected between the upper and lower surfaces of the waveguide substrate 1, and is transmitted to the out-coupling grating area 22 for emitting. In other embodiments, the functional area further includes a deflection grating area; the deflection grating area is provided with a deflection grating; light rays incident on the in-coupling grating area are modulated by the in-coupling grating; then light rays that satisfy the condition of total internal reflection transmission are transmitted towards the deflection grating area; and after being deflected and expanded by the deflection grating in the deflection grating area, light rays are transmitted to the out-coupling grating area for emission. In an embodiment, the deflection grating area includes at least two sub-deflection areas provided at two sides of the in-coupling grating area. The in-coupling grating, the deflection grating and the out-coupling grating are one-dimensional gratings or two-dimensional gratings; the specific grating shapes are able to be designed as straight-tooth gratings, slanted-tooth gratings, blazed gratings, etc.; and the shapes are able to be designed according to actual situations during specific implementation. In another embodiment, the in-coupling grating area and the out-coupling grating area are able to be provided with gratings with different periods, different duty cycles and different depths in different areas, so as to improve the performance of the diffractive optical waveguide. In an embodiment, for the out-coupling grating, the grating depth is set to increase progressively in the direction away from the in-coupling grating, thereby improving diffraction efficiency, mitigating the impact of reduced light intensity, and enhancing image uniformity. In another embodiment, auxiliary deflecting gratings are designed around the periphery of the out-coupling grating, such that light rays which initially have not be emitted by the out-coupling grating to the human eyes is redirected back to the out-coupling grating area for reuse, thereby improving the utilization of light.

When a light ray S2 (ambient light) incident on the non-functional area 3 passes through the anti-reflection structure 31, due to the effect of the anti-reflection structure 31, the reflection occurring at the surface of the waveguide substrate 1 is able to be reduced. Unlike the in-coupling grating, the anti-reflection structure 31 does not cause light rays incident on the waveguide substrate 1 to generate additional diffraction orders that would enable total internal reflection within the waveguide substrate 1; instead, it only generates transmitted diffraction orders and reflected diffraction orders. As no additional diffraction orders are generated, light rays energy of the transmitted diffraction orders increases, thereby improving the transmittance of the diffractive optical waveguide. It should be noted that, providing the anti-reflection structure 31 on the lower surface of the waveguide substrate 1 as shown in Fig. 3 is merely exemplary. In other embodiments, the anti-reflection structure 31 is provided on the upper surface of the waveguide substrate 1, or is provided on both the upper and lower surfaces of the waveguide substrate 1, which is able to be **designed** according to actual situations during specific implementation.

According to the diffractive optical waveguide provided in the embodiment of the present invention, an anti-reflection structure is provided in the non-functional area, such that light rays incident on the non-functional area undergo transmission diffraction after passing through the anti-reflection structure, thereby improving the transmittance of the diffractive optical waveguide. For example, when no anti-reflection structure is provided in the non-functional area, most of light rays incident on the non-functional area are reflected back, resulting in low transmittance. However, when an anti-reflection structure is provided in the non-functional area, light rays passing through the anti-reflection structure undergo diffraction, and light rays are modulated, such that the light energy of the transmitted diffraction orders increases, while the light energy of the reflected diffraction orders decreases, thereby achieving an anti-reflection effect.

In an embodiment, with continued reference to Fig. 3, the anti-reflection structure 31 includes a periodically-arranged grating.

In the embodiment, in order to achieve an anti-reflection effect, it is necessary for light to undergo diffraction after passing through the grating, and light rays are modulated, such that the light energy of the transmitted diffraction orders increases, while the light energy of the reflected diffraction orders decreases. It should be noted that, in the embodiment, the grating shape being a straight grating is given as an example, which is not intended to limit the embodiment of the present invention. In other embodiments, the grating shape is a blazed grating, slanted grating, or the like. The embodiment of the present invention is not limited thereto.

In order to improve light transmittance, with continued reference to Fig. 3, in this embodiment, the grating includes a one-dimensional grating, and the period of the one-dimensional grating satisfies:

$$D < \frac{\lambda_{\min}}{N_2 + N_1 * \sin(\alpha)}$$

, wherein D represents the period of the one-dimensional grating, $\lambda_{min}$ represents the minimum wavelength of light rays incident on the one-dimensional grating, $N_2$ represents the refractive index of the waveguide substrate, $N_1$ represents the refractive index of air, and $\alpha$ represents the incident angle of light rays incident on the one-dimensional grating. Light rays incident on the one-dimensional grating is light rays for which the transmittance needs to be improved in the embodiment of the present invention. This condition ensures that light rays within the light wavelength range requiring increased transmittance, after passing through the anti-reflection structure with the described period range, generate only transmitted diffraction orders and reflected diffraction orders, without producing any other diffraction orders. Thus, compared to a periodic structure that generates other diffraction orders in addition to the transmitted diffraction orders and reflected diffraction orders, the light energy in the direction of the transmitted diffraction orders is increased (by allocating the energy of other diffraction orders to the transmitted diffraction orders), thereby increasing the light transmittance. In addition, when the described condition is satisfied, the larger the period, the higher the transmittance.

In the embodiment of the present invention, a one-dimensional grating is processed in the non-functional area 3 of the waveguide substrate 1; and during specific implementation, the one-dimensional grating is processed by adding an additional layer of material on the waveguide substrate 1, or is processed directly on the substrate, such that light rays generat transmitted diffraction at the interface, thereby reducing reflection efficiency and improving transmittance. In other embodiments, Figs. 4 and 5 each show a schematic diagram of another structure taken along the section line BB' in Fig. 1. Referring to Fig. 4, the diffractive optical waveguide further includes a dielectric layer 4 provided on at least one side of the waveguide substrate (with one side as an example in Fig. 4, which is not intended to limit the embodiment of the present invention), and the grating is located on the dielectric layer 4. Referring to Fig. 5, the grating is directly provided on at least one side surface of the waveguide substrate 1 (with one side as an example in Fig. 5, which is not intended to limit the embodiment of the present invention).

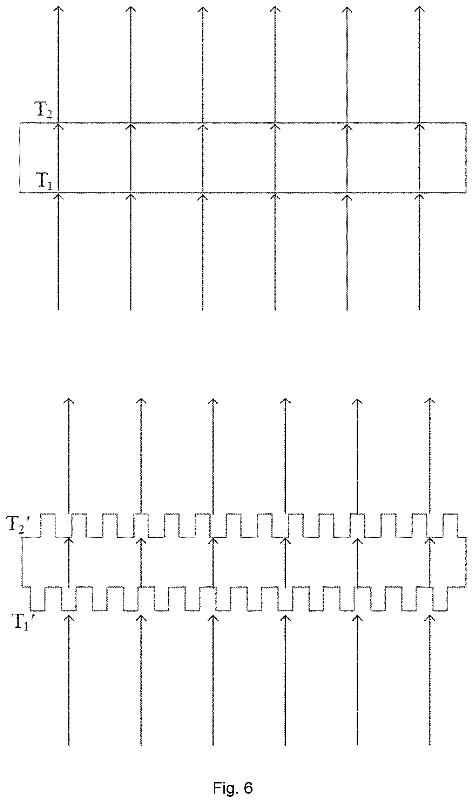

In an embodiment, Fig. 6 shows schematic diagrams of light rays paths of light transmitted by two diffractive optical waveguides according to embodiments of the present invention. The upper diagram is a diffractive optical waveguide without an anti-reflection structure in the related art. For a material substrate with a refractive index of 2.0, the transmittance of 532 nm light rays when incident from air into the substrate is $T_1$=88.889%, the transmittance of 532 nm light rays when incident from the substrate into air is $T_2$=88.889%, and the total transmittance is $T=T_1*T_2$=79.0125%. The lower diagram is a diffractive optical waveguide provided with an anti-reflection structure in the embodiments of the present invention. A one-dimensional grating with a period of 150 nm, a duty cycle of 50%, and a depth of 100 nm is processed at the two interfaces where the refractive indices change. The transmittance of 532 nm light rays incident from air into the substrate is $T_1'$ = 99.242%, the transmittance of 532 nm light rays incident from the substrate into air is $T_2'$ = 99.242%, and the total transmittance is $T'= T_1'*T_2'$= 98.4897%.

In another embodiment of the present invention, the grating further includes a two-dimensional grating, and the period of the two-dimensional grating satisfies:

$$D_i < \frac{\lambda_{\min}}{N_2 + N_1 * \sin(\alpha)};$$

wherein Di represents the maximum period of the two-dimensional grating, with i = 1 or 2, $\lambda_{min}$ represents the minimum wavelength of light rays incident on the two-dimensional grating, $N_2$ represents the refractive index of the waveguide substrate, $N_1$ represents the refractive index of air, and $\alpha$ represents the incident angle of light rays incident on the two-dimensional grating.

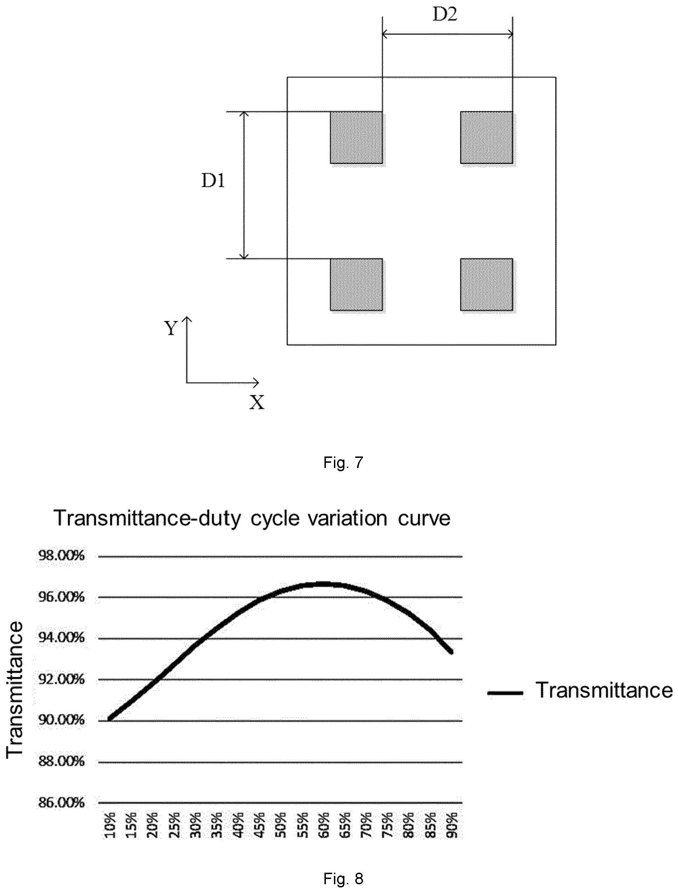

Fig. 7 shows a schematic top-view diagram of a partial structure of a non-functional area of a diffractive optical waveguide according to an embodiment of the present invention. Referring to Fig. 7, the two-dimensional grating is arranged in an array, wherein $D_2$ is the period of the grating in a first direction X, and $D_1$ is the period of the grating in a second direction Y, with the first direction X and the second direction Y intersecting. In the foregoing, $D_i$ represents the maximum period in the two-dimensional grating, that is, if the period $D_2$ in the first direction X is greater than the period $D_1$ in the second direction Y, it is determined that the value of $D_i$ is $D_2$, and if the period $D_2$ in the first direction X is smaller than the period $D_1$ in the second direction Y, it is determined that the value of $D_i$ is $D_1$. This condition ensures that light rays within the light wavelength range requiring increased transmittance, after passing through the described two-dimensional grating, generate only transmitted diffraction orders and reflected diffraction orders, without producing any other diffraction orders. Thus, compared to a periodic structure that generates other diffraction orders in addition to the transmitted diffraction orders and reflected diffraction orders, the light energy in the direction of the transmitted diffraction orders is increased (by allocating the energy of other diffraction orders to the transmitted diffraction orders), thereby increasing the light transmittance. When the described condition is satisfied, the larger the period, the higher the transmittance.

In an embodiment, taking a material with a refractive index of 2.3 as an example, the transmittance of 450 nm light rays from air into the material is $T_1$=84.481%, the transmittance of 450 nm light rays from the material into air is $T_2$=84.481%, and the total transmittance is $T=T_1*T_2$=71.3704%. A two-dimensional grating with a period of 100 nm*100 nm, a duty cycle of 50%, and a depth of 100 nm is processed at the two interfaces where the refractive indices change. The transmittance of 450 nm light rays from air to the material is $T_1'$=94.772%, the transmittance of 450 nm light rays from the material to air is $T_2'$=94.772%, and the total transmittance is $T'=T_1'*T_2'$=89.8173%.

In order to improve the light transmittance, in addition to designing the period of the grating, the duty cycle and depth of the grating is able to also be designed. In an embodiment, the duty cycle of the grating is greater than or equal to 10%, and less than or equal to 90%.

In an embodiment, referring to Fig. 3, the duty cycle of a grating refers to the ratio between the medium width D0 and the grating period D in the grating, and the duty cycle of a grating directly affects the distribution of light intensity and the transmission performance. Therefore, in an embodiment of the present invention, the duty cycle of a grating is greater than or equal to 10%, and less than or equal to 90%.

In an embodiment, the range of duty cycles is greater than or equal to 35%, less than or equal to 65%. A further description will be given below with reference to Fig. 8.

Fig. 8 shows a graph illustrating the relationship between transmittance and duty cycle of a diffractive optical waveguide according to an embodiment of the present invention. Referring to Fig. 8, the figure shows an analysis of the transmittance of vertically incident 450 nm light rays, wherein the refractive index of the material is 2.0, the period of the grating is 200 nm, and the height is 50 nm; and the duty cycle of the grating is scanned. It can be determined from Fig. 8 that as long as periodic grating modulation is formed, the transmittance is able to be increased. Therefore, the duty cycle range is greater than or equal to 10%, and less than or equal to 90%. In an embodiment, the duty cycle range is greater than or equal to 35%, and less than or equal to 65%.

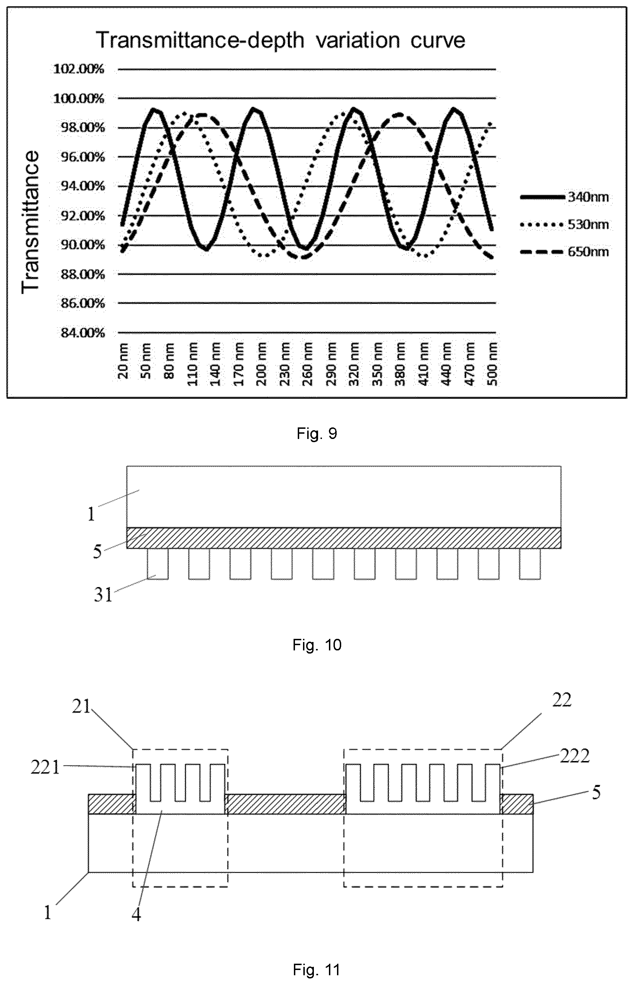

Fig. 9 shows a graph illustrating the relationship between transmittance and depth of a diffractive optical waveguide according to an embodiment of the present invention. Fig. 9 shows an analysis of the transmittance of vertically incident 340 nm light rays, 530 nm light rays, and 650 nm light rays, wherein the refractive index of the material is 2.0, the period of the grating is 100 nm, and the duty cycle is 50%; and the height of the grating is scanned. The modulation of light rays by the depth is periodic; the depth of the grating is greater than or equal

to $\dfrac{1}{12}\lambda$ , and less than or equal to $\dfrac{1}{4}\lambda$ ; $\lambda$ represents the wavelength of light rays incident on the grating; and within this range, efficient enhancement of transmittance for all light wavelengths requiring increased transmittance is able to be achieved. It can be determined from Fig. 9 that different grating depths are able to be designed for light of different wavelengths, so as to achieve the maximum enhancement of transmittance. For light of the same wavelength, multiple grating heights (curve peaks) are able to be designed; while for light within a certain waveband range, the grating height that provides the best performance is able to be adaptively selected for processing.

In another embodiment of the present invention, the anti-reflection structure further includes aperiodic structures located on the surface of the waveguide substrate; the distance $L$ between the two most distant points in the projection pattern of each of the aperiodic structures on the plane where the waveguide substrate is located is less than the minimum wavelength $\lambda_{min}$ of light rays incident on the anti-reflection structure, that is, $L<\lambda_{min}$; and the maximum gap l between the aperiodic structures is less than the minimum wavelength $\lambda_{min}$ of light rays incident on the anti-reflection structure that is, $l<\lambda_{min}$. Light rays incident on the anti-reflection structure is light rays for which the transmittance needs to be improved.

In an embodiment, in addition to processing a one-dimensional grating or a two-dimensional grating on a waveguide substrate as disclosed in the described embodiments of the present invention, aperiodic structures are able to be processed on the waveguide substrate, such that these aperiodic micro-nano structures disrupt the smoothness of the edge of the medium, thereby reducing its specular reflection efficiency; and because the aperiodic structures are not periodic, light rays will not undergo diffraction.

Fig. 10 shows a schematic diagram of another structure taken along the section line BB' in Fig. 1. Referring to Fig. 10, in the embodiment, the non-functional area is provided with an anti-reflection coating 5, and the anti-reflection coating 5 is located between the waveguide substrate 1 and the anti-reflection structure 31. The anti-reflection coating is an optical component, which is mainly configured to reduce surface reflection losses on the surface of the component, so as to improve optical efficiency. The refractive index of such films is typically between that of glass and air. The anti-reflection coating is composed of one or more transparent dielectric films, and these materials include, but are not limited to, magnesium fluoride, titanium oxide, lead sulfide, lead selenide, ceramic infrared light anti-reflection coatings, vinyl silsesquioxane hybrid films and the like.

In an embodiment, a grating, including a one-dimensional grating or a two-dimensional grating, is processed on the anti-reflection coating 5 coated on the non-functional area, and the period of the grating needs to meet the requirements of the described embodiments.

Fig. 11 shows a schematic diagram of yet another structure taken along the section line AA' in Fig. 1. Referring to Fig. 11, in the embodiment, the anti-reflection structure 31 is an anti-reflection coating.

Exemplarily, in this embodiment, the layered structure of the functional area consists of a waveguide substrate 1 and a dielectric layer 4 (which is able to be, in an embodiment, a transparent adhesive layer) that are arranged in a stacked manner, with the in-coupling grating 221 and the out-coupling grating 222 provided on the dielectric layer 4; and the layered structure of the non-functional area consists of a waveguide substrate 1 and an anti-reflection coating 5 that are arranged in a stacked manner. By providing the anti-reflection coating 5 in the non-functional area, light interference occurs at the position where the anti-reflection coating is provided, thereby reducing reflection and further improving transmittance. Compared to providing an anti-reflection coating on the dielectric in the related art, this reduces the losses from multiple interface refractions, thereby improving light transmittance.

On the basis of the same technical concept, the embodiments of the present invention further provide a near-eye display device. The near-eye display device is able to be augmented reality glasses. The augmented reality glasses include any one of the diffractive optical waveguides provided in the embodiments of the present invention. Therefore, the augmented reality glasses provided in the embodiments of the present invention have the corresponding beneficial effects of the diffractive optical waveguide provided in the embodiments of the present invention, which are not described herein again.

## Claims

1. A diffractive optical waveguide, comprising:

   a waveguide substrate, wherein the waveguide substrate comprising a functional area and a non-functional area thereon;
   the functional area comprises an in-coupling grating area and an out-coupling grating area, and at least a part of the non-functional area is provided with an anti-reflection structure;
   light rays incident on the in-coupling grating area enter the waveguide substrate from the in-coupling grating area, and are totally internally reflected in the waveguide substrate and transmitted to the out-coupling grating area for emission; and
   light rays incident on the non-functional area pass through the anti-reflection structure, reducing reflection to improve the transmittance of the diffractive optical waveguide.

2. The diffractive optical waveguide as claimed in claim 1, wherein the anti-reflection structure comprises a grating arranged periodically.

3. The diffractive optical waveguide as claimed in claim 2, wherein the grating comprises a one-dimensional grating, a period of the one-dimensional grating satisfying:

$$D < \frac{\lambda_{\min}}{N_2 + N_1 * \sin(\alpha)};$$

wherein D represents the period of the one-dimensional grating, $\lambda_{min}$ represents the minimum wavelength of light rays incident on the one-dimensional grating, $N_2$ represents a refractive index of the waveguide substrate, $N_1$ represents a refractive index of air, and $\alpha$ represents an incident angle of the light rays incident on the one-dimensional grating.

4. The diffractive optical waveguide as claimed in claim 2, wherein the grating comprises a two-dimensional grating, a period of the two-dimensional grating satisfying:

$$D_i < \frac{\lambda_{\min}}{N_2 + N_1 * \sin(\alpha)};$$

wherein $D_i$ represents the maximum period of the two-dimensional grating, with i=1 or 2, $\lambda_{min}$ represents the minimum wavelength of light rays incident on the two-dimensional grating, $N_2$ represents a refractive index of the waveguide substrate, $N_1$ represents a refractive index of air, and $\alpha$ represents an incident angle of light rays incident on the two-dimensional grating.

5. The diffractive optical waveguide as claimed in claim 2, wherein a duty cycle of the grating is greater than or equal to 10%, and less than or equal to 90%.

6. The diffractive optical waveguide as claimed in claim 5, wherein the duty cycle of the grating is greater than or equal to 35%, and less than or equal to 65%.

7. The diffractive optical waveguide as claimed in claim 2, wherein a depth of the grating is greater than or equal to $\frac{1}{12}\lambda$ and less than or equal to $\frac{1}{4}\lambda$, and $\lambda$ represents wavelength of light rays incident on the grating.

8. The diffractive optical waveguide as claimed in claim 1, wherein the anti-reflection structure comprises aperiodic structures located on a surface of the waveguide substrate, wherein a distance L between the two most distant points in a projection pattern of each of the aperiodic structures on a plane where the waveguide substrate is located is less than the minimum wavelength $\lambda_{min}$ of light rays incident on the anti-reflection structure, that is,

$$L < \lambda_{min};$$

andthe maximum gap l between the aperiodic structures is less than the minimum wavelength $\lambda_{min}$ of light rays incident on the anti-reflection structure that is,

$$l < \lambda_{min}.$$

9. The diffractive optical waveguide as claimed in claim 1, wherein the non-functional area is provided with an anti-reflection coating, and the anti-reflection coating is located between the waveguide substrate and the anti-reflection structure.

10. The diffractive optical waveguide as claimed in claim 1, wherein the anti-reflection structure is an anti-reflection coating.

11. The diffractive optical waveguide as claimed in claim 1, wherein the anti-reflection structure is directly provided on at least one side surface of the waveguide substrate; or at least one side of the waveguide substrate is provided with a dielectric layer, and the anti-reflection structure is provided on the dielectric layer.

12. A near-eye display device, comprising the diffractive optical waveguide as claimed in any one of claims 1 to 11.

Fig. 1

Fig. 2

Fig. 3

Fig. 4

Fig. 5

$T_2$

$T_1$

$T_2'$

$T_1'$

Fig. 6

Fig. 7

Transmittance-duty cycle variation curve

Fig. 8

## Transmittance-depth variation curve

Fig. 9

Fig. 10

Fig. 11

## INTERNATIONAL SEARCH REPORT

| International application No. |
|---|
| **PCT/CN2023/134416** |

**A. CLASSIFICATION OF SUBJECT MATTER**

G02B6/124(2006.01)i; G02B27/01(2006.01)i

According to International Patent Classification (IPC) or to both national classification and IPC

**B. FIELDS SEARCHED**

Minimum documentation searched (classification system followed by classification symbols)

IPC:G02B

Documentation searched other than minimum documentation to the extent that such documents are included in the fields searched

Electronic data base consulted during the international search (name of data base and, where practicable, search terms used)

CNABS, CNTXT, CNKI, VEN, ENTXT, USTXT, WPABS, ENTXTC: 增透, 透射, 透过, 减反, 抗反, 透光, 衍射, 光栅, 折射率, 波长, 周期, anti 1d reflecti??, transmit+, diffracti??, grating, refracti?? 1d index, wave 1d length, period

**C. DOCUMENTS CONSIDERED TO BE RELEVANT**

| Category* | Citation of document, with indication, where appropriate, of the relevant passages | Relevant to claim No. |
|---|---|---|
| X | WO 2023278791 A1 (GOOGLE LLC) 05 January 2023 (2023-01-05) description, paragraphs 0037-0062, and figures 1-8 | 1-12 |
| X | CN 215641928 U (SHENZHEN OPTIARK SEMICONDUCTOR TECHNOLOGY CO., LTD.) 25 January 2022 (2022-01-25) description, paragraphs 0057-0114, and figures 1-14 | 1-12 |
| X | CN 116661157 A (SHANGHAI NORTH OCEAN TECHNOLOGIES CO., LTD.) 29 August 2023 (2023-08-29) description, paragraphs 0018-0047, and figures 1-5 | 1, 10-12 |
| A | CN 215986721 U (JIANGXI PHOENIX OPTICAL TECHNOLOGY CO., LTD.) 08 March 2022 (2022-03-08) description, paragraphs 0036-0061, and figures 1-8 | 1-12 |
| A | US 2019227321 A1 (FACEBOOK TECHNOLOGIES, LLC) 25 July 2019 (2019-07-25) description, paragraphs 0041-0134, and figures 1-22 | 1-12 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 July 2024** | **16 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/134416**

| Patent document cited in search report | | | Publication date (day/month/year) | Patent family member(s) | | | Publication date (day/month/year) |
|---|---|---|---|---|---|---|---|
| WO | 2023278791 | A1 | 05 January 2023 | EP | 4363909 | A1 | 08 May 2024 |
| CN | 215641928 | U | 25 January 2022 | None | | | |
| CN | 116661157 | A | 29 August 2023 | None | | | |
| CN | 215986721 | U | 08 March 2022 | None | | | |
| US | 2019227321 | A1 | 25 July 2019 | US | 10761330 | B2 | 01 September 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

* CN 202311553513